# FASCICULE DE BREVET EUROPEEN

(11) **EP 1 147 403 B1**
(45) Date de publication et mention de la délivrance du brevet: **17.06.2009**
(21) Numéro de dépôt: 00974635.5
(22) Date de dépôt: 02.11.2000
(51) Int. Cl.: G01N 21/71

(54) **DISPOSITIF D'ANALYSE ELEMENTAIRE PAR SPECTROMETRIE D'EMISSION OPTIQUE SUR PLASMA PRODUIT PAR LASER**
ELEMENTARANALYSEVORRICHTUNG, BASIEREND AUF PLASMAEMISSIONSSPEKTROMETRIE, WOBEI DAS PLASMA DURCH EINEN LASER ERZEUGT WIRD
ELEMENTARY ANALYSIS DEVICE BY OPTICAL EMISSION SPECTROMETRY ON PLASMA PRODUCED BY A LASER

(30) Priorité: 03.11.1999 FR 9913717
(43) Date de publication de la demande: 24.10.2001
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: LACOUR, Jean-Luc Résidence le Clos d'Alençon, F-91140 Villebon sur Yvette (FR); WAGNER, Jean-François, F-93700 Drancy (FR); DETALLE, Vincent, Montreal, Quebec (CA); MAUCHIEN, Patrick, F-91120 Palaiseau (FR)
(74) Mandataire: Ilgart, Jean-Christophe
(86) Numéro de dépôt international: PCT/FR2000/003056
(87) Numéro de publication internationale: WO 2001/033202

(56) Documents cités:
- US-A- 5 583 634
- US-A- 5 751 416
- CREMERS D A ET AL: "REMOTE ELEMENTAL ANALYSIS BY LASER-INDUCED BREAKDOWN SPECTROSCOPY USING A FIBER-OPTIC CABLE" APPLIED SPECTROSCOPY,US,THE SOCIETY FOR APPLIED SPECTROSCOPY. BALTIMORE, vol. 49, no. 6, 1 juin 1995 (1995-06-01), pages 857-860, XP000508973 ISSN: 0003-7028
- MARQUARDT B J ET AL: "NOVEL PROBE FOR LASER-INDUCED BREAKDOWN SPECTROSCOPY AND RAMAN MEASUREMENTS USING AN IMAGING OPTICAL FIBER" APPLIED SPECTROSCOPY,US,THE SOCIETY FOR APPLIED SPECTROSCOPY. BALTIMORE, vol. 52, no. 9, 1 septembre 1998 (1998-09-01), pages 1148-1153, XP000779125 ISSN: 0003-7028
- M.BERNDT ET AL.: "Mikro-Emissionsspektralanalyse mit Festkörper-Laser" JENAER JAHRBUCH, 1965, pages 45-48, XP002142969
- WIGGENHAUSER H. ET AL: 'LIBS for non-destrictive testing of element distributions on surfaces' NDT&E INTERNATIONAL vol. 31, no. 4, 1998, pages 307 - 313, XP004292590

## Description

### DOMAINE TECHNIQUE

La présente invention concerne un dispositif d'analyse élémentaire par SEOPPL, c'est-à-dire par spectrométrie d'émission optique sur plasma produit par laser, technique qui se pratique en atmosphère naturelle.

Elle s'applique notamment au contrôle et à la caractérisation in situ d'échantillons de pièces à analyser.

Elle trouve en particulier une application dans le domaine de l'industrie nucléaire, pour le contrôle de matériaux radioactifs.

L'invention s'applique tout particulièrement à la cartographie de pastilles du combustible appelé MOX (pour "Mixed Oxide").

### ÉTAT DE LA TECHNIQUE ANTÉRIEURE

On connaît déjà un procédé d'analyse élémentaire par spectrométrie d'émission optique sur plasma produit par laser en présence d'argon par le document suivant auquel on se reportera :
[1] EP 0654663A (invention de N. Andre, P. Mauchien et A. Semerok) - voir aussi FR 2712697A et US 5583634.

La technique divulguée par ce document ne permet pas de contrôler les pastilles de combustible MOX avec une résolution suffisante et avec des cadences suffisamment élevées.

On rappelle que le combustible MOX utilisé dans les réacteurs nucléaires, sous forme de pastilles MOX frittées, contient un mélange d'oxydes de plutonium (PuO₂) et d'uranium (UO₂).

Le contrôle de la fabrication de ces pastilles est une étape essentielle pour vérifier les spécifications nécessaires à leur utilisation, en particulier celles qui sont relatives à l'homogénéité du mélange PuO₂ /UO₂ .

Il est nécessaire de disposer d'une technique de contrôle permettant la mesure de la distribution de la concentration de l'uranium et du plutonium dans les pastilles et répondant au cahier des charges du procédé de fabrication dont les points essentiels sont donnés ci-après.
◆ Cette technique doit pouvoir décrire quantitativement des objets dont le diamètre moyen vaut 10 µm. Or, afin de décrire de façon précise un objet de diamètre donné, on peut montrer qu'il est nécessaire de disposer d'une « sonde » de résolution spatiale 3 fois inférieure. Ceci entraîne, dans le cas d'une application aux pastilles MOX, que la taille du point de mesure doit avoir un diamètre d'environ 3 µm.
◆ Les éléments chimiques qui doivent être mesurés quantitativement à cette échelle sont l'uranium et le plutonium.
◆ La technique doit permettre la réalisation de cartographies en deux dimensions de pastilles de natures différentes : d'une part les pastilles crues (avant passage dans un four), qui sont fragiles et poreuses, et d'autre part les pastilles frittées (après passage dans le four). Les contraintes des mesures sur ces deux genres d'échantillons sont très différentes.
◆ La préparation des pastilles à analyser doit être minime de façon à être compatible avec un suivi « en ligne » d'un procédé de fabrication industriel. Les mesures doivent pouvoir être effectuées de façon déportée pour éviter la contamination de l'appareillage de mesure.
◆ Le nombre de pastilles à contrôler pour une campagne s'effectuant sur une journée doit être de plusieurs unités pour satisfaire les besoins de contrôle, la surface minimale d'examen étant environ égale à 1 mm² par pastille.

En outre il est souhaitable que la technique employée ne génère pas d'effluents liquides radioactifs, que la partie nucléarisée de cette technique soit minime de façon à limiter les interventions en zone contrôlée et que l'appareillage de mesure permette l'analyse d'échantillons radioactifs sans nécessiter de préparation particulière.

On connaît trois techniques principales permettant de contrôler l'homogénéité des pastilles MOX.

Les deux premières permettent de former l'image de la surface d'une telle pastille. Il s'agit de l'autoradiographie alpha, qui consiste à mesurer l'émission de particules alpha par cette pastille, et de l'attaque métallographique qui est un examen microscopique d'une section de la pastille ayant subi un traitement acide (qui conduit à une attaque différenciée entre PuO₂ et UO₂).

La troisième permet de faire une microanalyse quantitative de surface et utilise une microsonde électronique pour analyser l'émission de rayonnement X induite par un bombardement électronique de la pastille.

L'autoradiographie alpha ne permet d'obtenir qu'une image qualitative des éléments émetteurs de particules alpha. Cette technique détecte ainsi, sans discrimination, l'ensemble des émetteurs alpha comme par exemple le plutonium et l'américium.

La résolution de cette technique est de l'ordre de 40 µm, valeur insuffisante vis-à-vis des performances requises (quelques micromètres).

Ainsi l'autoradiographie alpha ne répond-elle que très partiellement au cahier des charges du contrôle des pastilles de combustible MOX.

L'analyse par microsonde électronique est la technique de référence pour valider le procédé de fabrication des pastilles frittées d'oxydes mixtes de plutonium et d'uranium. Les limitations essentielles de cette technique sont les suivantes :
□ la préparation spécifique des échantillons à analyser, qui nécessite plusieurs heures de traitement,
□ la durée élevée de la mesure en analyse quantitative, une cartographie de 1000 µm x 250 µm avec une résolution de 3 µm nécessitant une analyse pendant plusieurs dizaines d'heures,
□ l'impossibilité de réaliser des mesures de distribution de concentration dans les pastilles crues, la forte porosité de telles pastilles rendant la mesure par microsonde longue et difficile.

La microsonde électronique n'est donc pas adaptée au contrôle « en ligne » de la fabrication des pastilles MOX.

L'attaque métallographique, quant à elle, est relativement longue à mettre en oeuvre. De plus, elle engendre des effluents radioactifs dans le cas d'une analyse de matériaux radioactifs tels que des pastilles de combustible MOX.

La plupart des techniques de contrôle de surfaces utilisent des faisceaux de particules chargées qui rendent difficile l'analyse d'isolants et d'échantillons peu conducteurs tels que les pastilles MOX. Ces techniques sont mises en oeuvre sous vide et ne permettent pas d'isoler le système de détection qui, lors de mesures d'échantillons radioactifs, risque d'être contaminé et doit être blindé pour ne pas être affecté par les rayonnements.

Les méthodes optiques, en particulier la SEOPPL, sont mieux adaptées à l'analyse de tels matériaux. En particulier, l'interaction d'un faisceau laser avec un matériau est peu dépendante de la nature de ce matériau. De plus, cette interaction s'effectue à la pression atmosphérique et peut avoir lieu directement dans une boîte à gants. L'information optique résultant de cette interaction peut être collectée par une fibre optique et analysée de façon déportée à l'aide d'un appareillage placé en dehors des moyens de confinement radioactif. Cela permet d'éviter les problèmes de contamination et de faciliter la maintenance.

Une technique d'analyse élémentaire d'échantillons solides par SEOPPL est également connue par le document suivant auquel on se reportera :
[2] Measurement and Testing, contrat MAT1-CT-93-0029, Study of emission spectroscopy on laser produced plasma for localised multielemental analysis in solids with imaging, Novembre 1993 - Avril 1996, Rapport final, Coordinateur du projet : C.E.A. - Saclay DCC/DPE (France).

Selon la technique connue par ce document [2], un faisceau laser est focalisé par une lentille sur un diaphragme puis dirigé sur un objectif de type Cassegrain (objectif réflectif), dont la résolution optique est de l'ordre de 2 µm. La focalisation du faisceau laser sur le diaphragme conduit à une image à la surface de l'échantillon qui est la combinaison de celles du laser et du diaphragme. Cela ne permet pas de réaliser l'imagerie en-dessous de 6 µm à 8 µm.

Un tel montage demande en outre un positionnement extrêmement précis des optiques pour réaliser les performances les meilleures et nécessite de fréquentes reprises du réglage.

De plus, l'objectif Cassegrain possède un miroir central qui génère une zone d'ombre centrale qui provoque une perte sensible de l'énergie laser et limite ainsi l'énergie déposée ou réduit l'ouverture utilisée pour le laser si l'on travaille hors axe (« off axis »). En outre le miroir central génère aussi de la diffraction. Ces derniers points se traduisent par une perte de résolution.

La technique connue par le document [2] limite de façon rédhibitoire les performances en termes de résolution spatiale. Elle ne permet pas d'obtenir une résolution spatiale suffisante pour pouvoir être appliquée à la cartographie de pastilles du combustible MOX.

D.A. Cremers et al., Applied Spectroscopy, vol.49, n°6, 1995, pages 857-860, divulgue un dispositif d'analyse élémentaire par spectrométrie d'émission optique sur plasma produit par laser.

### EXPOSÉ DE L'INVENTION

La présente invention a pour but de remédier aux inconvénients précédents et plus généralement de proposer un dispositif d'analyse élémentaire par SEOPPL susceptible d'avoir une haute résolution spatiale et de permettre une cadence de mesure élevée tout en dégradant au minimum l'état de surface de l'objet analysé.

Elle a pour objet un dispositif d'analyse élémentaire par spectrométrie d'émission optique sur plasma produit par laser, comme défini dans la revendication 1.

La formation de l'image du diaphragme est entièrement régie par l'Optique géométrique.

Si l'on fait abstraction de l'énergie apportée par le faisceau laser, on constate que le diaphragme est un objet réel placé devant une optique, préférentiellement constituée de manière réfractive par une ou plusieurs lentilles.

Cette optique peut donc être conçue de manière à projeter à l'infini l'image du diaphragme.

En revanche, le faisceau de lumière laser, qui ne se focalise pas dans le plan du diaphragme, ne sortira pas de cette optique en étant parfaitement parallèle.

En conséquence, après avoir traversé les deuxièmes moyens optiques, ce faisceau ne se focalisera pas dans le plan de l'image du diaphragme.

On peut ainsi dire que le montage optique utilisé évite de faire coïncider le plan image du diaphragme et le point focal du laser, ce qui permet de maîtriser la taille d'interaction (résolution d'analyse).

L'invention permet à la source laser de coopérer avec le diaphragme et les premiers et deuxièmes moyens optiques pour créer, sur l'objet, en une seule impulsion laser, un impact avec une puissance surfacique supérieure à 1 GW/cm², cette puissance surfacique étant de préférence environ égale ou supérieure à 10 GW/cm².

Selon un mode de réalisation préféré de l'invention, les deuxièmes moyens optiques ont une ouverture numérique environ égale ou supérieure à 0,1.

La taille de l'impact du faisceau laser sur l'objet peut être supérieure ou égale à 1 µm.

De préférence elle vaut environ 3 µm pour l'application aux pastilles MOX.

Toutefois, dans d'autres applications, cette taille peut aller de 1 µm à 10 µm.

De préférence, la fréquence de déplacement de l'objet, entre deux impulsions laser de la source, est supérieure ou égale à 15 Hz, de façon à réduire le temps d'analyse en assurant la synchronisation des tirs laser à la même cadence.

Une fréquence de déplacement inférieure peut être utilisée.

Une platine assurant le déplacement continu ou pas à pas de l'objet peut être employée. Dans le cas d'un déplacement continu de la platine, le pas (« pitch ») de l'analyse est proportionnel à la vitesse de déplacement de la platine et inversement proportionnel à la fréquence de répétition des tirs lasers.

Selon un mode de réalisation préféré du dispositif objet de l'invention, la source est apte à émettre une lumière ultraviolette.

De préférence, la variation relative d'énergie d'une impulsion laser à une autre n'excède pas 5%.

Selon un mode de réalisation préféré de l'invention :
- le diaphragme comporte une ouverture circulaire apte à sélectionner la partie centrale du faisceau laser issu de la source laser,
- les premiers moyens optiques sont des moyens optiques réfractifs comprenant par exemple une lentille composée, et
- les deuxièmes moyens optiques sont des moyens optiques réfractifs comprenant un objectif de microscope.

De préférence, les premiers et deuxièmes moyens optiques sont traités anti-reflet à la longueur d'onde de la lumière émise par la source laser.

Selon un mode de réalisation préféré du dispositif objet de l'invention, ce dispositif comprend en outre des moyens de soufflage d'un jet de gaz, susceptible d'augmenter l'émission optique du plasma (par exemple un jet d'argon), sur l'objet.

De préférence, le dispositif comprend en outre :
- des moyens d'observation de l'objet, permettant de disposer l'objet dans le plan image du diaphragme et
- un miroir réfléchissant à la longueur d'onde de la source laser et transparent aux autres longueurs d'onde, ce miroir étant disposé sur le trajet de la lumière entre les premiers et deuxièmes moyens optiques, et prévu pour réfléchir vers ces deuxièmes moyens optiques la quasi-totalité du faisceau laser et transmettre aux moyens d'observation une image de l'objet.

### BRÈVE DESCRIPTION DES DESSINS

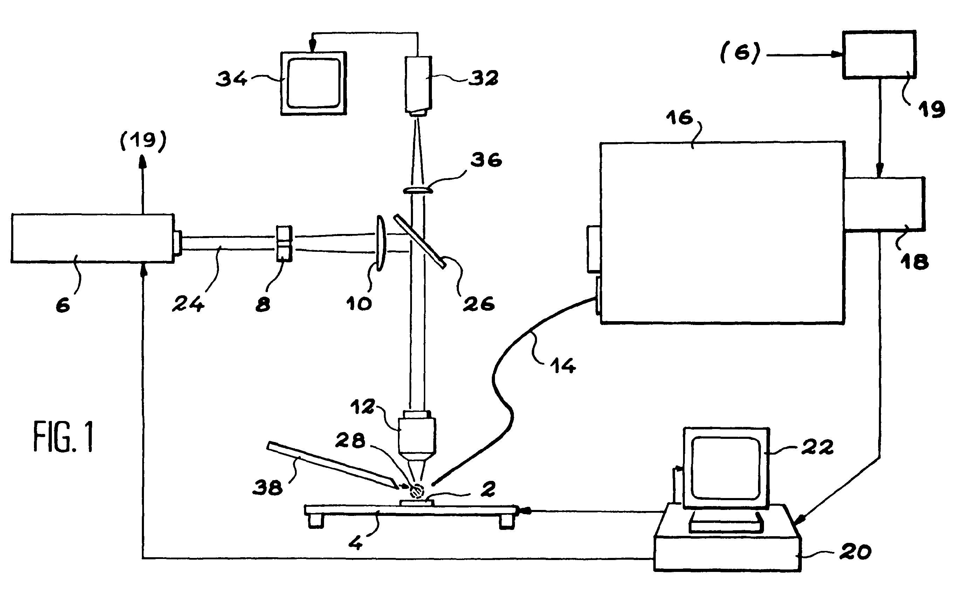

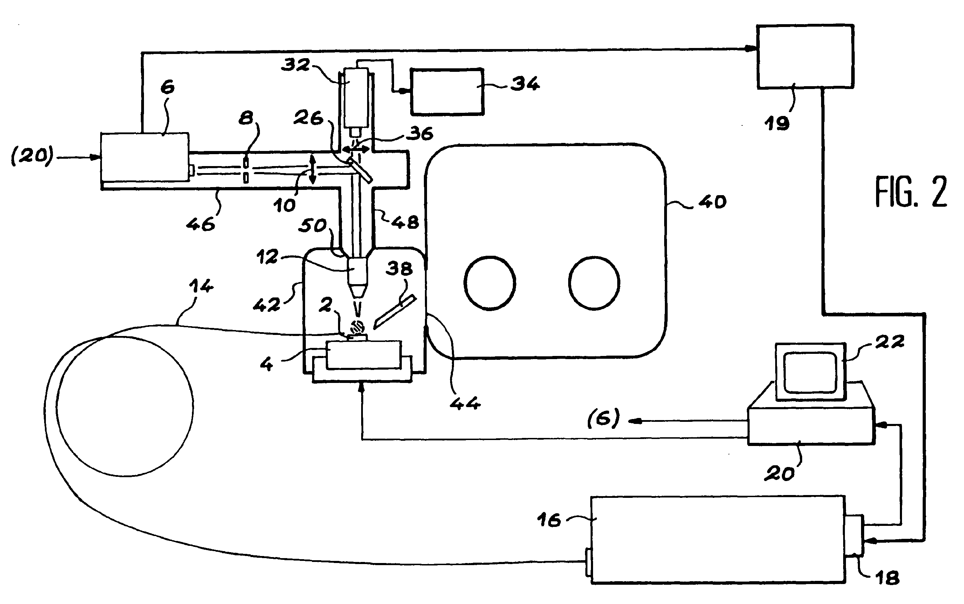

La présente invention sera mieux comprise à la lecture de la description d'exemples de réalisation donnés ci-après, à titre purement indicatif et nullement limitatif, en faisant référence aux dessins annexés sur lesquels :
■ la figure 1 est une vue schématique d'un mode de réalisation particulier du dispositif de SEOPPL objet de l'invention et
■ la figure 2 illustre schématiquement une installation d'analyse de pastilles de combustible MOX, utilisant le dispositif de la figure 1.

### EXPOSÉ DÉTAILLÉ DE MODES DE RÉALISATION PARTICULIERS

Comme on l'a vu, l'invention est un dispositif de spectroscopie d'émission optique sur plasma produit par laser (SEOPPL) qui est tout particulièrement utilisable pour le contrôle des pastilles de combustible MOX.

Pour effectuer une microanalyse par spectroscopie d'émission optique sur plasma produit par laser, on concentre, à la surface d'un échantillon à caractériser, un faisceau laser pulsé qui atteint une forte irradiance une fois focalisé sur l'échantillon de manière à produire un plasma constitué des éléments présents dans les premiers micromètres de la surface de l'échantillon.

Ce plasma émet un rayonnement lumineux et l'analyse des raies atomiques et ioniques de ce rayonnement permet de connaître les concentrations respectives des différents éléments constitutifs de la surface de l'échantillon.

En déplaçant ce dernier, on accède à la distribution des concentrations de ces éléments, ce qui permet d'établir des cartographies élémentaires.

L'adaptation de cette technique à la mesure rapide de la répartition de la concentration des éléments dans les pastilles MOX avec une résolution de 3 µm, conduit à n'utiliser, conformément à l'invention, qu'une seule impulsion laser par impact.

Cette caractéristique de l'invention va à l'encontre des choix habituellement rencontrés qui privilégient de faire la moyenne de plusieurs impulsions laser par impact.

L'avantage de cette procédure est de réduire le temps de l'analyse et de mieux maîtriser la profondeur et le diamètre des cratères d'ablation sur une pastille.

De plus, pour obtenir des mesures représentatives, la puissance surfacique « déposée » sur la pastille est supérieure à 10 GW/cm². De telles valeurs permettent d'obtenir des cratères d'ablation de quelques micromètres de profondeur seulement qui ne dégradent pas significativement l'état de surface de l'objet.

Ces valeurs permettent aussi d'effectuer la mesure sur un objet dont les irrégularités de surface sont du même ordre de grandeur que la résolution spatiale demandée.

Les moyens utilisés pour réaliser les mesures sont choisis pour être adaptés aux puissances laser mises en oeuvre et pour obtenir des tailles d'impacts (diamètre des cratères d'ablation ou résolution latérale) d'environ 3 micromètres.

Les moyens de déplacement de la pastille sont choisis pour obtenir une fréquence d'acquisition de spectres qui soit égale ou supérieure à 15 Hz en vue d'améliorer la vitesse d'analyse.

Ces caractéristiques confèrent à la spectroscopie d'émission optique sur plasma produit par laser un atout indéniable vis-à-vis des autres techniques précitées et permettent de répondre à l'objectif.

La figure 1 est une vue schématique d'un exemple de dispositif de spectroscopie d'émission optique sur plasma produit par laser conforme à l'invention et adapté à la microanalyse de pastilles MOX.

Comme on l'a vu, les échantillons à analyser sont de natures différentes. L'un (le composé cru) est fragile alors que le second (le composé fritté) est un matériau dense, difficile à ablater. Le dispositif de la figure 1 est justement conçu de façon à réaliser correctement l'ablation des échantillons frittés et des pastilles crues.

Ce dispositif est destiné à l'analyse de pastilles MOX telles que la pastille 2 et comprend une platine 4 sur laquelle est disposée la pastille. Il s'agit d'une platine de micro-déplacement selon deux directions perpendiculaires X et Y.

Le dispositif comprend aussi un laser pulsé 6, un diaphragme 8, une optique convergente 10, un objectif de focalisation 12, une fibre optique 14, un spectromètre 16 muni d'un système de détection 18 et un ordinateur 20 muni d'un écran d'affichage 22.

On va revenir sur tous ces composants dans ce qui suit.

Le choix de la longueur d'onde du laser utilisé 6 est imposé par la nature des matériaux à analyser. Il s'agit d'un laser qui émet dans l'ultraviolet pour obtenir le meilleur couplage laser-matière pour l'ablation de matériaux.

Dans l'exemple considéré, le laser 6 est de type solide Nd-YAG quadruplé en fréquence, apte à émettre des impulsions lasers dont la durée vaut quelques nanosecondes. Sa longueur d'onde vaut 266 nm. Il permet, à cette longueur d'onde, de « déposer » des puissances surfaciques supérieures à 10 GW/cm².

Le choix d'un fonctionnement en « mono tir » (c'est-à-dire de créer chaque impact avec une seule impulsion laser) nécessite d'avoir une énergie très stable d'une impulsion à l'autre (variation relative d'énergie ne dépassant pas 5%).

Ce besoin conduit à choisir un laser compact, de faible énergie (environ 2 mJ à 266 nm), fournissant une telle énergie très stable.

L'énergie déposée sur la cible est inférieure à quelques centaines de microjoules à cause du filtrage spatial.

Cette énergie, focalisée sur des surfaces de quelques µm², permet d'atteindre les irradiances (puissances surfaciques) suffisantes pour l'ablation d'une pastille MOX frittée.

De plus, la compacité du laser facilite son intégration dans un environnement industriel.

Sa capacité à fonctionner avec une fréquence égale ou supérieure à 15 Hz, de façon stable et reproductible, permet de réaliser l'acquisition de cartographies à la cadence nécessaire au contrôle du procédé de fabrication des pastilles MOX.

Le faisceau 24, émis par le laser 6, est filtré spatialement par le diaphragme 8 : l'ouverture de ce diaphragme a une taille inférieure à celle du faisceau 24 et apte à sélectionner la partie centrale de ce faisceau 24. En cas de besoin, le diamètre du faisceau peut être adapté à l'aide d'un montage optique de type téléscope.

On précise que ce faisceau n'est pas focalisé dans le plan du diaphragme.

L'optique convergente 10 est par exemple une lentille composée convergente qui projette à l'infini l'image du diaphragme 8.

Le faisceau laser ainsi obtenu est ensuite dirigé par un miroir diélectrique 26 sur l'objectif de focalisation 12 prévu pour la focalisation de ce faisceau laser sur la pastille 2.

Il s'agit d'un objectif de microscope réfractif, assemblé sans colle, traité anti-reflet pour la longueur d'onde d'émission du laser 6 (266 nm dans l'exemple considéré) et capable de supporter le flux lumineux issu du laser 6 sans dommage.

On précise que l'objectif 12 reçoit l'image du diaphragme 8 projetée à l'infini par l'optique 10 et focalise cette image sur la pastille 2.

De plus, l'ensemble formé par le diaphragme, l'optique 10 et l'objectif 12 satisfait aux conditions suivantes :
- l'image du diaphragme focalisée sur la pastille atteint la dimension souhaitée sur cette pastille et
- le point focal du faisceau laser, après traversée du diaphragme, de l'optique 10 et de l'objectif 12, est en dehors du plan image du diaphragme.

Cet objectif 12 possède en outre une ouverture numérique importante, supérieure ou égale à 0,1. Ce choix évite l'interaction du faisceau laser avec le plasma 28 généré lors de l'ablation laser.

Ce phénomène d'interaction provoque des fluctuations dans la production du plasma et diminue les performances de reproductibilité, ce qui est préjudiciable à la réalisation de cartographies quantitatives.

De plus, cet objectif 12 possède une résolution optique de 1 µm permettant de focaliser une image du diaphragme à la surface des pastilles sans aberration optique notable. Ces caractéristiques sont importantes pour obtenir une focalisation du faisceau laser sur un diamètre de 3 µm. Cette résolution spatiale de la sonde analytique est nécessaire pour décrire quantitativement des objets d'une taille de 10 µm.

Ce type d'optique, associé à la longueur d'onde d'ablation de 266 nm et à une irradiance minimale de 10 GW/cm², est la solution technique qui permet l'ablation contrôlée et localisée de matériaux frittés.

L'objectif 12 est supporté par un bâti de microscope non représenté. Cet objectif de focalisation 12, associé au diaphragme 8 qui est placé au point focal de l'ensemble optique 10-objectif 12, permet d'obtenir des cratères d'ablation dont le diamètre peut être aussi petit que 1 µm voire moins.

La position de la pastille 2 au point focal du faisceau laser est contrôlée par visualisation, à travers le miroir 26, de la surface de cette pastille 2 au moyen d'une caméra CCD 32 associée à un écran d'affichage 34 et disposée au dessus du miroir diélectrique 26 qui est traité à la longueur d'onde du laser.

Le plan de mise au point de la caméra CCD coïncide avec le plan de focalisation du faisceau laser.

La lentille 36, disposée entre le miroir 26 et la caméra 32, sert à réaliser l'image de la surface de l'échantillon sur la caméra 32.

Cette caméra 32 permet de sélectionner la zone à analyser et de placer la surface de l'échantillon sur le plan de l'image du diaphragme 8 formée par l'objectif 12.

La pastille à analyser 2 est positionnée au micromètre près sur la platine de micro-déplacement motorisée suivant les deux axes perpendiculaires X et Y.

Le déplacement dans le plan XY permet de choisir la zone à cartographier et de réaliser la cartographie de la pastille.

Après chaque impulsion laser, la platine est déplacée automatiquement d'une distance prédéfinie (pas de la mesure). Selon le pas choisi, les impacts laser sont jointifs (déplacement égal au diamètre du cratère d'ablation) ou non jointifs.

Le déplacement de la platine peut être piloté au moyen d'une manette de commande de positionnement (non représentée) ou directement par un logiciel de commande contenu dans l'ordinateur 20.

La fréquence de déplacement de la platine entre deux points de mesure est supérieure ou égale à 15 hertz. Cette fréquence de déplacement est l'une des caractéristiques importantes du dispositif de la figure 1 car elle permet de réaliser un contrôle du procédé de fabrication des pastilles MOX avec un nombre suffisant d'échantillons.

L'émission optique du plasma 28 est collectée par la fibre optique 14 dont une extrémité est maintenue par des moyens non représentés et placée à proximité de la zone de formation du plasma 28 qui est produit par interaction du faisceau laser avec la pastille 2. L'autre extrémité de la fibre optique est reliée à l'entrée du spectromètre optique 16.

La résolution de ce spectromètre 16 est grande : la largeur à mi-hauteur (« full width at half maximum ») des pics qu'il fournit est supérieure à 0,05 nm. Une telle résolution est nécessaire pour l'analyse des spectres d'émission du plutonium et de l'uranium car ces spectres contiennent un grand nombre de raies.

La collection de la lumière au moyen d'une fibre optique permet de travailler de façon déportée et évite à l'utilisateur du dispositif d'être en permanence à proximité de la zone où sont manipulés les échantillons radioactifs. Ce mode de collection contribue à la sécurité de la technique d'analyse des pastilles MOX conforme à l'invention.

Le spectromètre 16 est couplé au système de détection 18 qui est composé d'une caméra CCD équipée d'un intensificateur. La gamme spectrale accessible avec ce système de détection 18 va de 190 nm à 800 mn. La fenêtre spectrale de mesure vaut une dizaine de nanomètres.

Un générateur d'impulsions 19 permet de déclencher la porte d'intensification de la caméra du système 18 avec un délai choisi par rapport aux impulsions laser.

Le laser 6, la platine de micro-déplacement 4, le spectromètre 16 et le système de détection 18 sont commandés à l'aide de l'ordinateur 20 qui est muni d'un logiciel de commande approprié.

La séquence de mesure utilisée est déterminante pour obtenir les performances attendues. Le système de détection 18 réalise la mesure seulement pendant un intervalle de temps de mesure déterminé après chaque impulsion émise par le laser (pour des raisons de résolution temporelle). Le choix de cet intervalle de mesure est déterminant pour l'application considérée ici (analyse de pastilles de combustible MOX).

Au début de l'interaction laser-matière, il y a création d'un plasma (étincelle) très lumineux dont le signal optique n'est pas exploitable. Après la fin de cette émission de rayonnement de corps noir, continu en longueur d'onde, la mesure de l'émission optique des éléments devient exploitable.

Les cartographies des pastilles MOX sont réalisées avec une résolution spatiale de 3 µm et obtenues avec un intervalle ou « porte » de mesure de 100 ns à 1 µs, cette « porte » étant ouverte de 10 ns à 500 ns après l'émission d'une impulsion laser.

Après détection de l'émission due à l'impact de cette impulsion laser sur la pastille 2, l'ordinateur 20 envoie un ordre de déplacement à la platine 4. Une fois ce déplacement effectué, une nouvelle séquence de mesure est lancée.

Le logiciel dont est muni l'ordinateur 20 permet de sélectionner la longueur d'onde médiane du spectre à enregistrer et de choisir la dimension de la surface à analyser ainsi que le pas de mesure.

A chaque tir laser, ce logiciel enregistre le spectre sur une plage spectrale d'environ 10 nm. Les raies d'émission optique qui sont caractéristiques de l'uranium et du plutonium sont alors exploitées.

Des moyens comprenant un conduit 38 sont prévus pour projeter un jet d'un gaz tel que l'argon vers la surface de la pastille analysée 2 pour augmenter le signal d'émission optique du plasma.

A ce sujet, on se reportera au document [1] mentionné plus haut.

Cela permet de multiplier l'intensité des raies d'émission optique par un coefficient supérieur ou égal à 10 (2,5 à 3 dans le cas de macroplasma - voir document [1]) par rapport à la spectrométrie optique en atmosphère naturelle, sans jet d'argon.

On précise qu'un étalonnage est effectué afin d'établir, pour les éléments chimiques des pastilles analysées, la relation entre l'intensité du signal d'émission et la concentration de ces éléments dans les pastilles. Le contrôle de cet étalonnage est réalisé une fois par jour afin d'assurer la justesse des mesures effectuées.

Pour cet étalonnage, on utilise des échantillons de référence de pastilles MOX frittées. Ces échantillons sont élaborés par mélange de poudres d'oxydes, selon un procédé de fabrication qui conduit à l'obtention d'échantillons de référence suffisamment homogènes.

L'étalonnage est effectué en réalisant une centaine de mesures au moyen d'impulsions laser successives, réparties aléatoirement à la surface des échantillons de référence.

La dispersion des mesures est de l'ordre de la dispersion de la technique utilisée, c'est-à-dire d'environ 4% à 5%.

Le logiciel d'exploitation des spectres détermine la valeur des intensités brutes et nettes des raies d'émission sélectionnées dans la plage spectrale de mesure.

Les courbes d'étalonnage sont établies avec les valeurs des intensités des raies d'émission de chaque élément chimique ou avec les rapports d'intensité des raies d'émission des deux éléments (Pu et U) contenus dans les pastilles.

Pour chaque impact laser, les valeurs d'intensité des raies (ou les rapports de raies) sont transformées en concentrations absolues à partir des courbes d'étalonnage.

La distribution en concentration de chaque élément chimique à la surface de la pastille est convertie en une image en couleurs par un logiciel de traitement d'image.

Chaque gamme de concentration est représentée par une couleur.

Les cartographies élémentaires de pastilles d'oxydes mixtes PuO₂/UO₂ sont réalisées au moyen d'un dispositif conforme à l'invention, ce dispositif étant adapté à la manipulation de radioéléments.

L'objectif de focalisation 12 et la platine de micro-déplacement 4 sont alors placés dans une enceinte de confinement, par exemple une boîte à gants.

La figure 2 est une vue schématique d'un tel dispositif permettant la réalisation de cartographies élémentaires de pastilles mixtes PuO₂/UO₂.

On y retrouve les composants précédemment décrits en faisant référence à la figure 1. En outre, le dispositif représenté sur cette figure 2 comprend :
- une première enceinte de confinement 40 dans laquelle sont introduites les pastilles que l'on veut analyser, et
- une deuxième enceinte de confinement 42 reliée à la première enceinte 40 par un sas 44 qui permet de faire passer, de l'enceinte 40 à l'enceinte 42, une pastille que l'on veut analyser.

La deuxième enceinte 42 contient l'objectif de focalisation 12 et la platine de micro-déplacement 4.

Chaque pastille est replacée dans l'enceinte 40 après avoir été mesurée avec le dispositif.

On voit aussi, sur la figure 2, des canalisations 46 et 48 reliant le laser 6 et la caméra 32 à la deuxième enceinte 42.

La canalisation 46 contient le diaphragme 8 et l'optique 10 et la canalisation 48 contient le miroir 26 et la lentille 36.

Une paroi étanche de confinement 50, s'appuyant sur le pourtour de l'objectif 12, isole l'intérieur de l'enceinte 42 de ces canalisations 46 et 48, tout en laissant passer le faisceau laser comme on le voit sur la figure 2.

L'invention n'est pas limitée au contrôle de pastilles de combustible MOX. Elle s'applique à l'analyse élémentaire de tout échantillon ou objet dont on veut connaître les éléments constitutifs jusqu'à des résolutions de taille d'impact de 1 µm.

A titre purement indicatif et nullement limitatif :
- l'ouverture du diaphragme est circulaire et a un diamètre de 250 µm,
- l'optique 10 a une distance focale de 1000 mm,
- l'objectif de microscope 12 a une ouverture numérique voisine de 250 et son grandissement est déterminé en fonction du diamètre recherché pour les points d'impact.

## Revendications

1. Dispositif d'analyse élémentaire par spectrométrie d'émission optique sur plasma produit par laser, ce dispositif étant **caractérisé en ce qu'**il comprend :
- une source laser pulsée (6),
- un diaphragme (8) arrangé pour sélectionner une partie du faisceau laser émis par la source, et éventuellement délimiter la forme de l'impact du faisceau laser sur un objet à analyser (2), ce faisceau laser n'étant pas focalisé dans le plan du diaphragme,
- des premiers moyens optiques (10) arrangés pour projeter à l'infini l'image du diaphragme,
- des deuxièmes moyens optiques (12) arrangés pour recevoir l'image du diaphragme projetée à l'infini par les premiers moyens optiques et à la focaliser sur l'objet à analyser de façon à produire un plasma (28) sur la surface de cet objet, l'ensemble formé par le diaphragme (8) et les premiers (10) et deuxièmes (12) moyens optiques étant arrangés de manière à ce que
◆ l'image du diaphragme focalisée sur l'objet atteint la dimension voulue sur cet objet, cette dimension correspondant à la résolution spatiale recherchée, et
◆ le point focal du faisceau laser, après traversée du diaphragme et des premiers et deuxièmes moyens optiques, est en dehors du plan image du diaphragme,
- des moyens (16, 18) d'analyse d'un spectre du rayonnement lumineux émis par le plasma, par l'intermédiaire d'une fibre optique (14) dont une extrémité est placée à proximité du plasma et dont l'autre extrémité est reliée aux moyens d'analyse,
- des moyens (20) de détermination, à partir de cette analyse de spectre, de la composition élémentaire de l'objet, et
- des moyens de déplacement de l'objet dans un plan perpendiculaire à l'axe optique du faisceau d'excitation après chaque impulsion laser.

2. Dispositif selon la revendication 1, dans lequel les deuxièmes moyens optiques (12) ont une ouverture numérique environ égale ou supérieure à 0,1.

3. Dispositif selon l'une quelconque des revendications 1 et 2, dans lequel la taille de l'impact du faisceau laser sur l'objet est supérieure ou égale à 1 µm.

4. Dispositif selon l'une quelconque des revendications 1 à 3, dans lequel la fréquence de déplacement de l'objet (2), entre deux impulsions laser de la source (6), est supérieure ou égale à 15 Hz.

5. Dispositif selon l'une quelconque des revendications 1 à 4, dans lequel la source (6) est apte à émettre une lumière ultraviolette.

6. Dispositif selon l'une quelconque des revendications 1 à 5, dans lequel la variation relative d'énergie d'une impulsion laser à une autre n'excède pas 5%.

7. Dispositif selon l'une quelconque des revendications 1 à 6, dans lequel le diaphragme (8) comporte une ouverture circulaire apte à sélectionner la partie centrale du faisceau laser issu de la source laser, les premiers moyens optiques sont des moyens optiques réfractifs, et les deuxièmes moyens optiques sont des moyens optiques réfractifs comprenant un objectif de microscope (12).

8. Dispositif selon la revendication 7, dans lequel les premiers et deuxièmes moyens optiques (10, 12) sont traités anti-reflet à la longueur d'onde de la lumière émise par la source laser (6).

9. Dispositif selon l'une quelconque des revendications 1 à 8, comprenant en outre des moyens (38) de soufflage d'un jet de gaz sur l'objet (2).

10. Dispositif selon l'une quelconque des revendications 1 à 9, comprenant en outre :
- des moyens (32) d'observation de l'objet, permettant de disposer l'objet dans le plan image du diaphragme et
- un miroir (26) réfléchissant à la longueur d'onde de la source laser et transparent aux autres longueurs d'onde, ce miroir étant disposé sur le trajet de la lumière entre les premiers et deuxièmes moyens optiques, et prévu pour réfléchir vers ces deuxièmes moyens optiques la quasi-totalité du faisceau laser et transmettre aux moyens d'observation une image de l'objet.

## Claims

1. Elementary analysis device by optical emission spectrometry on laser produced plasma, this device being **characterized in that** it comprises:
- a pulsed laser source (6)
- a diaphragm (8) arranged for selecting part of the laser beam emitted by the source, and possibly delimiting the shape of the impact of the laser beam on an object to be analysed (2), this laser beam not being focused in the plane of the diaphragm,
- first optical means (10) arranged for projecting the image of the diaphragm to infinity,
- second optical means (12) arranged for receiving the image of the diaphragm projected to infinity by the first optical means and focusing it on the object to be analysed to produce plasma (28) on the surface of this object, the assembly formed by the diaphragm (8) and the first (10) and second (12) optical means being arranged so that:
v the image of the diaphragm focused on the object reaches the required dimension on this object, this dimension corresponding to the sought space resolution, and
v the focal point of the laser beam, after crossing through the diaphragm and the first and second optical means, is outside the image plane of the diaphragm,
- means (16, 18) of analysing a light radiation spectrum emitted by the plasma, via an optical fiber (14) one end of which is placed in the vicinity of the plasma and the other end of which is connected with the analyzing means,
- means (20) of determining the elementary composition of the object starting from this spectrum analysis, and
- means for displacing the object in a plane which is perpendicular to the optical axis of the excitation beam after each laser pulse.

2. Device according to claim 1, in which the second optical means (12) have a numerical aperture equal to approximately 0.1 or greater.

3. Device according to either of claims 1 and 2, in which the impact size of the laser beam on the object is greater than or equal to 1 µm.

4. Device according to any one of claims 1 to 3, in which the displacement frequency of the object (2) between two laser pulses of the source (6) is greater than or equal to 15 Hz.

5. Device according to any one of claims 1 to 4, in which the source (6) is capable of emitting ultraviolet light.

6. Device according to any one of claims 1 to 5, in which the relative variation of energy between one laser pulse and the next does not exceed 5%.

7. Device according to any one of claims 1 to 6, in which the diaphragm (8) comprises a circular aperture capable of selecting the central part of the laser beam output from the laser source, the first optical means are refractive optical means, and the second optical means are refractive optical means comprising a microscope objective (12).

8. Device according to claim 7, in which the first and second optical means (10, 12) are anti-reflection treated at the wavelength of the light emitted by the laser source (6).

9. Device according to any one of claims 1 to 8, also comprising means (38) of blowing a gas jet onto the object (2).

10. Device according to any one of claims 1 to 9, also comprising:
- means (32) of observing the object, so that the object can be placed in the image plane of the diaphragm and
- a mirror (26) reflecting at the wavelength of the laser source and transparent at other wavelengths, this mirror being placed on the light path between the first and second optical means and designed to reflect almost the entire laser beam to these second optical means and to transmit an image of the object to the observation means.

## Patentansprüche

1. Elementaranalysenvorrichtung basierend auf der optischen Emissionsspektrometrie an durch einen Laser erzeugtem Plasma, wobei diese Vorrichtung **dadurch gekennzeichnet ist, dass** sie Folgendes umfasst:
- eine Pulslaserquelle (6),
- ein Diaphragma (8), das zum Auswählen eines Teils des von der Quelle emittierten Laserstrahls und gegebenenfalls Begrenzen der Form des Auftreffens des Laserstrahls auf einen zu analysierenden Gegenstand (2) angeordnet ist, wobei dieser Laserstrahl nicht in der Diaphragmaebene fokussiert ist,
- erste optische Mittel (10), die zum Projizieren des Bilds des Diaphragmas auf unendlich angeordnet sind,
- zweite optische Mittel (12), die zum Empfangen des durch die ersten optischen Mittel auf unendlich projizierten Bilds des Diaphragmas und zu seinem Fokussierten auf den zu untersuchenden Gegenstand angeordnet sind, um ein Plasma (28) auf der Oberfläche dieses Gegenstands zu erzeugen, wobei die durch das Diaphragma (8) und die ersten (10) und zweiten (12) optischen Mittel gebildete Einheit so angeordnet ist, dass
◆ das auf den Gegenstand fokussierte Bild des Diaphragmas die auf diesem Gegenstand erwünschte Größe erreicht, wobei diese Größe der geforderten räumlichen Auflösung entspricht, und
◆ sich der Brennpunkt des Laserstrahls nach dem Durchqueren des Diaphragmas und der ersten und zweiten optischen Mittel außerhalb der Bildebene des Diaphragmas befindet,
- Mittel (16, 18) zur Analyse eines Spektrums der durch das Plasma emittierten Lichtstrahlung mittels einer optischen Faser (14), deren eines Ende sich in der Nähe des Plasmas befindet und deren anderes Ende mit den Analysenmitteln verbunden ist,
- Mittel (20) zur Bestimmung der Elementzusammensetzung des Gegenstands aus dieser Spektrumsanalyse, und
- Mittel zum Bewegen des Gegenstandes in einer Ebene senkrecht zur optischen Achse des Anregungsstrahls nach jedem Laserpuls.

2. Vorrichtung gemäß Anspruch 1, bei der die zweiten optischen Mittel (12) eine numerische Apertur von ungefähr gleich oder über 0,1 aufweisen.

3. Vorrichtung gemäß einem der Ansprüche 1 und 2, bei der die Größe des Auftreffens des Laserstrahls auf den Gegenstand über oder gleich 1 µm ist.

4. Vorrichtung gemäß einem der Ansprüche 1 bis 3, bei der die Frequenz der Bewegung des Gegenstands (2) zwischen zwei Laserpulsen der Quelle (6) über oder gleich 15 Hz ist.

5. Vorrichtung gemäß einem der Ansprüche 1 bis 4, bei der die Quelle (6) ultraviolettes Licht emittieren kann.

6. Vorrichtung gemäß einem der Ansprüche 1 bis 5, bei der die relative Energieänderung von einem Laserpuls zum anderen 5 % nicht überschreitet.

7. Vorrichtung gemäß einem der Ansprüche 1 bis 6, bei der das Diaphragma (8) eine kreisförmige Öffnung umfasst, die den zentralen Teil des aus der Laserquelle ausgehenden Laserstrahls auswählen kann, die ersten optischen Mittel lichtbrechende optische Mittel sind und die zweiten optischen Mittel lichtbrechende optische Mittel sind, die ein Mikroskopobjektiv (12) umfassen.

8. Vorrichtung gemäß Anspruch 7, bei der die ersten und zweiten optischen Mittel (10, 12) für die Wellenlänge des von der Laserquelle (6) emittierten Lichts antireflexbehandelt sind.

9. Vorrichtung gemäß einem der Ansprüche 1 bis 8, die außerdem Mittel (38) zum Blasen eines Gasstrahls auf den Gegenstand (2) umfasst.

10. Vorrichtung gemäß einem der Ansprüche 1 bis 9, die außerdem
- Mittel (32) zur Beobachtung des Gegenstands, die das Anordnen des Gegenstands in der Bildebene des Diaphragmas erlauben, und
- einen Spiegel (26) umfasst, der bei der Wellenlänge der Laserquelle reflektiert und bei anderen Wellenlänge transparent ist, wobei dieser Spiegel im Strahlengang zwischen den ersten und zweiten optischen Mitteln angeordnet und dazu bestimmt ist, nahezu den gesamten Laserstrahl auf diese zweiten optischen Mittel zu reflektieren und ein Bild des Gegenstands auf die Beobachtungsmittel zu übertragen.
